# EUROPEAN PATENT APPLICATION

(11) **EP 2 814 083 A1**
(43) Date of publication of application: **17.12.2014**
(21) Application number: 13003237.8
(22) Date of filing: 25.06.2013
(51) Int. Cl.: H01M 2/16, H01M 4/13, H01M 4/36, H01M 4/505, H01M 4/525, H01M 4/58, H01M 4/587, H01M 4/62, H01M 4/583, H01M 4/66

(54) **Secondary battery**

(30) Priority: 14.06.2013 CN 201310236298
(71) Applicant: Greenful New Energy Co., Ltd., Shanghai (CN)
(72) Inventor: Mengqun, Si, 88-20 Shanghai (CN); Ying, Zhou, 18-501 Shanghai (CN)
(74) Representative: Müller-Boré & Partner Patentanwälte PartG mbB

(57) **Abstract**

A secondary battery (100) according to the present invention includes a first electrode (10), a second electrode (20), an ion transmission member (30) in contact with the first electrode (10) and the second electrode (20), and a hole transmission member (40) in contact with the first electrode (10) and the second electrode (20).

## Description

### BACKGROUND

The present invention relates to secondary batteries.

Batteries convert chemical energy of chemical substances provided in their interior to electric energy by an electrochemical oxidation-reduction reaction. Recently, the batteries are used worldwide mainly for portable electronic equipment in the fields of electronics, communications, computers, etc. Further, there is a future demand for practical use of batteries as large-scale devices for mobile entities (e.g., electric automobile, etc.) and stationary systems (e.g., a load-leveling system, etc.). Accordingly, the batteries are becoming more and more important key devices.

Among the batteries, a lithium-ion secondary battery is widely used at the present day. A general lithium-ion secondary battery includes a positive electrode using a lithium transition metal composite oxide as an active material, a negative electrode using a material capable of occluding and extracting lithium ions (e.g., lithium metal, lithium alloy, metal oxide, or carbon) as an active material, nonaqueous electrolyte, and a separator (for example, see Japanese Patent Application Laid-Open Publication No. H05-242911).

### SUMMARY OF INVENTION

However, a conventional lithium-ion secondary battery is limited in output and capacity per unit weight. Accordingly, a novel secondary battery is demanded.

The present invention has been made in view of the foregoing and has its object of providing a novel secondary battery which can attain high output and high capacity.

A secondary battery according to the present invention includes: a first electrode; a second electrode; an ion transmission member in contact with the first electrode and the second electrode; and a hole transmission member in contact with the first electrode and the second electrode.

In one embodiment, the first electrode contains a composite oxide, and the composite oxide contains alkali metal or alkali earth metal.

In one embodiment, the composite oxide contains a p-type composite oxide as a p-type semiconductor.

In one embodiment, the p-type composite oxide contains lithium and nickel, in which at least one type selected from the group consisting of antimony, lead, phosphorus, boron, aluminum, and gallium is doped.

In one embodiment, the composite oxide contains a composite oxide capable of being in a solid solution state with the p-type composite oxide.

In one embodiment, the composite oxide further contains a composite oxide having an olivine structure.

In one embodiment, the composite oxide having an olivine structure contains lithium and manganese, and the lithium has a valence larger than 1.

In one embodiment, the composite oxide contains: a p-type composite oxide as a p-type semiconductor; a composite oxide capable of being in a solid solution state with p-type composite oxide; and a composite oxide having an olivine structure.

In one embodiment, the composite oxide contains LiₓNiyM_{z}O_{α}, Li₂MnO₃, and LipMnPO₄, wherein 0<x<3, y+x=1, 1<α<4, β>1.0, and M is at least one type selected from the group consisting of antimony, lead, phosphorus, boron, aluminum, and gallium.

In one embodiment, the composite oxide contains LiₓNi_{y}M_{z}O_{α}, Li₂MnO₃, and Li_{γ}MnSiO₄, wherein 0<x<3, y+z=1, 1<α<4, γ>1.0, and M is at least one type selected from the group consisting of antimony, lead, phosphorus, boron, aluminum, and gallium.

In one embodiment, the composite oxide contains Li₁₊ₓ(Fe_{0.2}Ni_{0.2})Mn_{0.6}O₃, Li₂MnO₃, and Li_{β}MnPO₄, wherein 0<x<3, β>1.0, and M is at least one type selected from the group consisting of antimony, lead, phosphorus, boron, aluminum, and gallium.

In one embodiment, the composite oxide contains fluorine.

In one embodiment, the ion transmission member is any of liquid, gel, and solid.

In one embodiment, the hole transmission member includes nonwoven fabric carrying a ceramic material.

In one embodiment, at least one of the first electrode and the second electrode is bonded to a porous film layer containing inorganic oxide filler.

In one embodiment, the organic oxide filler contains α-Al₂O₃ as a main component.

In one embodiment, the porous film layer further contains ZrO₂-P₂O₅. In one embodiment, the second electrode contains graphene.

In one embodiment, the graphene includes a carbon nanotube.

In one embodiment, lithium is doped in the graphene.

In one embodiment, the lithium is doped in a manner that the second electrode is allowed to contain organic lithium and is heated.

In one embodiment, lithium metal is attached to the second electrode. In one embodiment, the second electrode contains halogen.

In one embodiment, the halogen includes fluorine.

In one embodiment, the halogen includes iodine.

In one embodiment, the second electrode further contains silicon.

In one embodiment, the second electrode contains alkali metal.

In one embodiment, the alkali metal contains sodium.

In one embodiment, the alkali metal contains potassium.

In one embodiment, the second electrode contains titanium.

In one embodiment, the second electrode contains zinc.

In one embodiment, at least one of the first electrode and the second electrode includes an acrylic resin layer.

In one embodiment, the acrylic resin layer includes rubber macromolecules containing polyacrylic acid as a basic unit.

In one embodiment, the acrylic resin layer includes macromolecules which have molecular weights different from each other as the rubber macromolecules.

In one embodiment, the secondary battery further includes: a first current collector in contact with the first electrode; and a second current collector in contact with the second electrode. Each of the first current collector and the second current collector is made of stainless steel.

According to the present invention, a secondary battery can be provided which can attain high output and high capacity.

### BRIEF DESCRIPTION OF DRAWINGS

FIG. 1 is a schematic illustration of a secondary battery according to the present invention.
FIG. 2 is a graph representation showing the relationship of specific energy between a secondary battery according to one embodiment and a lithium ion battery.
FIG. 3 is a graph representation indicating the discharge capacities at 1 C in Example 1, Example 6, and Comparative Example 1.

### DESCRIPTION OF EMBODIMENTS

A secondary battery according to embodiments of the present invention will be described below with reference to the accompanying drawings. However, the present invention is not limited to the following embodiments.

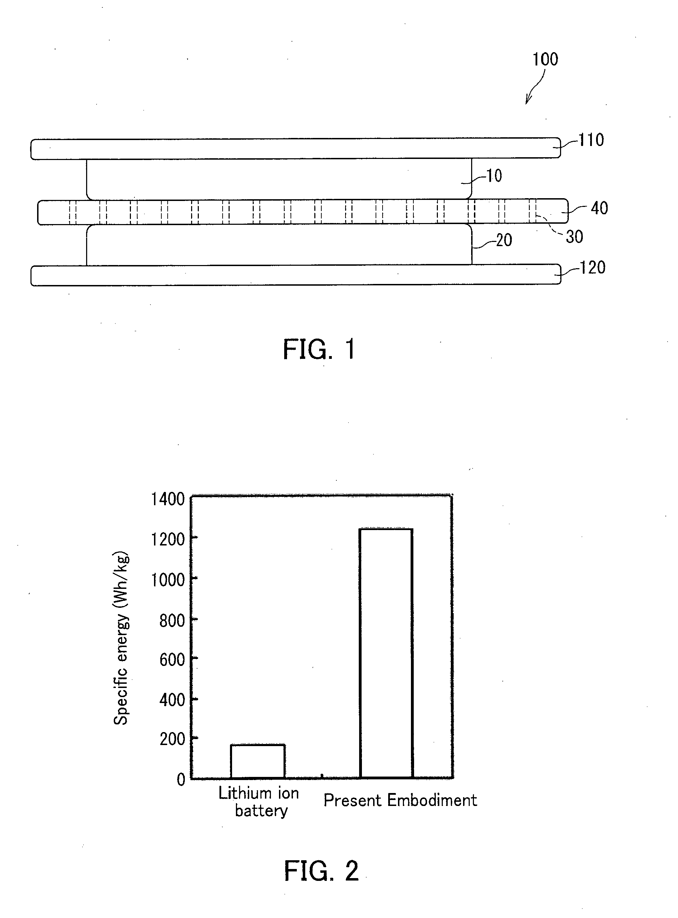

FIG. 1 is a schematic illustration of a secondary battery 100 according to the present embodiment. The secondary battery 100 includes an electrode 10, an electrode 20, an ion transmission member 30, and a hole transmission member 40. The electrode 10 faces the electrode 20 with the ion transmission member 30 and the hole transmission member 40 interposed. The electrode 10 is physically out of contact with the electrode 20 by intervention of at least one of the ion transmission member 30 and the hole transmission member 40.

Here, the electrode (first electrode) 10 functions as a positive electrode, while the electrode (second electrode) 20 functions as a negative electrode. In discharge, the potential of the electrode 10 is higher than that of the electrode 20. The electric current flows from the electrode 10 to the electrode 20 through an external load (not shown). In charge, a high potential terminal of an external power source (not shown) is electrically connected to the electrode 10, while a low potential terminal of the external power source (not shown) is electrically connected to the electrode 20. Further, the electrode 10 forms the positive electrode by being in contact with a current collector (first current collector) 110. The electrode 20 forms the negative electrode by being in contact with a current collector (second current collector) 120.

The ion transmission member 30 is in contact with the electrode 10 and the electrode 20. FIG. 1 schematically shows that the ion transmission member 30 is provided in vias linearly extending in the hole transmission member 40. The ion transmission member 30 is liquid (specifically, electrolyte), for example. Alternatively, the ion transmission member 30 may be solid or gel. In discharge, ions (cations) generated in the electrode 20 move to the electrode 10 through the ion transmission member 30. By contrast, in charge, ions generated in the electrode 10 move to the electrode 20 through the ion transmission member 30. Movement of the ions from the electrode 10 to the electrode 20 increases the potential of the electrode 10 higher than that of the electrode 20.

For example, the ions are of alkali metal or alkali earth metal. The electrode 10 contains a compound containing the alkali metal or the alkali earth metal. The electrode 20 is capable of occluding and extracting the alkali metal ions or the alkali earth metal ions. When the secondary battery 100 performs discharge, the alkali metal ions or the alkali earth metal ions are extracted from the electrode 20 and move to the electrode 10 through the ion transmission member 30. When the secondary battery 100 performs charge, the alkali metal ions or the alkali earth metal ions move from the electrode 10 to the electrode 20 through the ion transmission member 30 to be occluded. It is noted that both the alkali metal ions and the alkali earth metal ions may be transmitted through the ion transmission member 30.

The electrode 10 of the secondary battery 100 in the present embodiment contains a p-type semiconductor. In both charge and discharge, holes move through the electrode 10.

The hole transmission member 40 is in contact with the electrode 10 and the electrode 20. In discharge, the holes in the electrode 10 move to the electrode 20 through an external load (not shown). The electrode 10 receives the holes through the hole transmission member 40. By contrast, in charge, the holes in the electrode 10 move to the electrode 20 through the hole transmission member 40. The electrode 10 receives the holes from an external power source (not shown).

Not only the ions but also the holes move in charge and discharge in the secondary battery 100 of the present embodiment. Specifically, in discharge, the ions generated in the electrode 20 move to the electrode 10 through the ion transmission member 30. As well, due to the potential difference between the electrode 10 and the electrode 20, the holes are caused to circulate among the electrode 10, an external load (not shown), the electrode 20, and the hole transmission member 40 in this order. Further, in charge, the ions generated in the electrode 10 move to the electrode 20 through the ion transmission member 30. As well, the holes are caused to circulate among the electrode 10, the hole transmission member 40, the electrode 20, and an external power source (not shown) in this order.

As described above, in the secondary battery 100 according to the present embodiment, the ions generated in the electrode 10 or the electrode 20 move between the electrode 10 and the electrode 20 through the ion transmission member 30. Movement of the ions between the electrode 10 and the electrode 20 can attain high capacity of the secondary battery 100. Further, in the secondary battery 100 of the present embodiment, the holes move between the electrode 10 and the electrode 20 through the hole transmission member 40. The holes are smaller than the ions and have high mobility. Accordingly, the secondary battery 100 can attain high output.

FIG. 2 is a graph representation showing the relationship of specific energy between the secondary battery 100 according to the present embodiment and a general lithium ion battery. As understood from FIG. 2, the secondary battery 100 according to the present embodiment can significantly improve output characteristics.

Thus, the secondary battery 100 of the present embodiment can attain high capacity and high output. The secondary battery 100 in the present embodiment has both the characteristics of a chemical battery, which transmits the ions through the ion transmission member 30, and the characteristics of a semiconductor battery, which transmits the holes from the electrode 10 as a p-type semiconductor through the hole transmission member 40. Accordingly, the secondary battery 100 may be a hybrid battery of a chemical battery and a physical battery (semiconductor battery).

The amount of electrolyte as the ion transmission member 30 can be reduced in the secondary battery 100 according to the present embodiment. Accordingly, even if the electrode 10 would come in contact with the electrode 20 to cause an internal short-circuit, an increase in temperature of the secondary battery 100 can be suppressed. Further, the secondary battery 100 of the present embodiment can decrease less in capacity at quick discharge and is excellent in cycle characteristic.

It is noted that where a n-type semiconductor is used as the electrode 20 in addition to the use of the p-type semiconductor as the electrode 10, the capacity and the output characteristics of the secondary battery 100 can be further increased.

Whether the electrode 10 and the electrode 20 are a p-type semiconductor or a n-type semiconductor can be determined by measuring the Hall effect. When a magnetic field is applied, while electric current is allowed to flow, voltage is generated by Hall effect in the direction orthogonal to the direction in which the electric current flows and the direction in which the magnetic field is applied. According to the direction of the voltage, whether the electrodes are a p-type semiconductor or a n-type semiconductor can be determined.

It is noted that FIG. 1 schematically shows that the ion transmission member 30 is provided in the vias formed in the hole transmission member 40, which however, should not be taken to limit the present invention. The ion transmission member 30 may be provided apart from the hole transmission member 40.

Further, in the above description, the ions and the holes are transmitted through the ion transmission member 30 and the hole transmission member 40, respectively, in charge and discharge. However, the ions or the holes may be transmitted through one of the ion transmission member 30 and the hole transmission member 40 in either of charge or discharge. For example, the ion transmission member (e.g., electrolyte) 30 may be absent in discharge, and only the holes may be transmitted. Alternatively, the hole transmission member 40 may be absent in charge, and only the ions may be transmitted from the electrode 10 to the electrode 20 through the ion transmission member 30.

Moreover, the hole transmission member 40 may be formed integrally with the ion transmission member 30. That is, an identical member may transmit both the ions and the holes.

### [Electrode 10]

The electrode 10 contains a composite oxide containing alkali metal or alkali earth metal. For example, the alkali metal may be at least one type of lithium and sodium. The alkali earth metal may be magnesium. The composite oxide functions as a positive electrode active material of the secondary battery 100. For example, the electrode 10 is made of a positive electrode material obtained by mixing a composite oxide and a positive electrode binding agent. A conductive material may be further mixed with the positive electrode material. It is noted that the composite oxide is not limited one type and may be a plurality of types.

The composite oxide contains a p-type composite oxide as a p-type semiconductor. In order to function as a p-type semiconductor, the p-type composite oxide contains, for example, lithium and nickel, in which at least one type selected from the group consisting of antimony, lead, phosphorus, born, aluminum, and gallium is doped. This composite oxide is expressed as LiₓNi_{y}M_{z}O_{α}. Wherein 0<x<3, y+z=1, and 1<α<4. Further, M is an element to allow the composite oxide to function as a p-type semiconductor and is at least one type selected from the group consisting of antimony, lead, phosphorus, born, aluminum, and gallium. Doping causes structural deficiency in the p-type composite oxide to form the holes.

For example, the p-type composite oxide preferably contains lithium nickelate in which a metal element is doped. The p-type composite oxide may be lithium nickelate in which antimony is doped, for example.

It is noted that the composite oxide is preferably obtained by mixing plural types of composite oxides. For example, the composite oxide preferably contains a composite oxide capable of being in a solid solution state with a p-type composite oxide. The solid solution is formed of a p-type composite oxide and a composite oxide capable of being in a solid solution state. For example, the composite oxide capable of being in a solid solution state tends to form a layered solid solution with nickelate. The solid solution has a structure which allows holes to easily move. For example, the composite oxide capable of being in a solid solution state is lithium manganese oxide (Li₂MnO₃). In this case, lithium has a valence of 2.

Further, the composite oxide preferably contains a composite oxide having an olivine structure. The olivine structure can reduce deformation of the electrode 10 even when the p-type composite oxide forms the holes. Further, for example, it is preferable that the composite oxide having an olivine structure contains lithium and manganese, and lithium has a valence larger than 1. In this case, lithium ions can easily move, and the holes can be easily formed. For example, the composite oxide having an olivine structure is LiMnPO₄.

Moreover, the composite oxide may contain a p-type composite oxide, a composite oxide capable of being in a solid solution state, and a composite oxide having an olivine structure. Mixing of plural types of composite oxides in this manner can improve the cycle characteristic of the secondary battery 100.

For example, the composite oxide may contain LiₓNi_{y}M_{z}O_{α}, Li₂MnO₃, and Li_{β}MnPO₄. Wherein 0<x<3, y+z=1, 1<α<4, and β>1.0. Alternatively, the composite oxide may contain LiₓNi_{y}M_{z}O_{α}, Li₂MnO₃, and Li_{γ}MnSiO₄. Wherein 0<x<3, y+z=1, 1<α<4, and γ>1.0. Or, the composite oxide may contain Li₁₊ₓ(Fe_{0.2}Ni_{0.2})Mn_{0.6}O₃, Li₂MnO₃, and Li_{β}MnPO₄. Wherein 0<x<3 and β<1.0.

Examples of the active material of the electrode 10 may include composite oxides, such as lithium nickelate, lithium manganese phosphate, lithium manganate, lithium nickel manganate, respective solid solutions of them, and respective degenerates of them (eutectic of metal, such as antimony, aluminum, magnesium, etc.), and substances obtained by chemically or physically synthesizing various materials. Specifically, it is preferable to use, as the composite oxide, a substance obtained in physical synthesis by allowing antimony doped nickelate, lithium manganese phosphate, and lithium manganese oxide to mechanically collide with one another, or a substance obtained in synthesis by chemically coprecipitating the three composite oxides.

It is noted that the composite oxide may contain fluorine. For example, LiMnPO₄F may be used as the composite oxide. This can reduce variation in characteristics of the composite oxide even if hydrofluoric acid is generated due to the presence of lithium hexafluorophosphate in the electrolyte.

The electrode 10 is made of a positive electrode material obtained by mixing a composite oxide, a positive electrode binding agent, and a conductive material. For example, the positive electrode binding agent may contain acrylic resin, so that an acrylic resin layer is formed in the electrode 10. For example, the positive electrode binding agent may contain rubber macromolecules having a polyacrylate unit.

It is noted that it is preferable that macromolecules with comparatively high molecular weight and macromolecules with comparatively low molecular weight are mixed as the rubber macromolecule. When the macromolecules with different molecular weights are mixed, durability against hydrofluoric acid can be exhibited, and hindrance to hole movement can be reduced.

For example, the positive electrode binding agent is manufactured by mixing a degenerated acrylonitrile rubber particle binder (BM-520B by ZEON Corporation, or the like) with carboxymethylcellulose (CMC) having a thickening effect and soluble degenerated acrylonitrile rubber (BM-720H by ZEON Corporation, or the like). It is preferable to use, as the positive electrode binding agent, a binding agent (SX9172 by ZEON Corporation) made of polyacrylic acid monomer with an acrylic group. Further, acetylene black, ketjen black, and various types of graphite may be used solely or in combination as the conducting agent.

It is noted that, as will be described later, when a nail penetration test or a crash test is performed on a secondary battery, temperature increased at an internal short-circuit may locally exceed several hundred degrees centigrade according to the test conditions. For this reason, the positive electrode binding agent is preferably made of a material that hardly causes burn down and melting. For example, at least one type of material, of which crystalline melting point and kickoff temperature are 250°C or higher, is preferably used as the binding agent.

As one example, preferably, the binding agent is amorphous, has high thermal resistance (320°C), and contains rubber macromolecules having rubber elasticity. For example, the rubber macromolecules have an acrylic group having a polyacrylonitrile unit. In this case, the acrylic resin layer includes rubber macromolecules containing polyacrylic acid as a base unit. The use of such a positive electrode binding agent can reduce exposure of the current collectors which may be caused by slipping down of the electrode accompanied by deformation by softening and burn down of the resin. As a result, abrupt flow of excessive electric current can be reduced, thereby causing no abnormal overheating. Further, a binding agent with a nitrile group exemplified by polyacrylonitrile hinders hole movement a little and is accordingly used suitably in the secondary battery 100 of the present embodiment.

The use of the aforementioned materials as the positive electrode binding agent may hardly form a crack in the electrode 10 in assembling the secondary battery 100. This can maintain a high yield. In addition, the use of a material with an acrylic group as the positive electrode binding agent can reduce internal resistance to reduce damage of the property of the p-type semiconductor of the electrode 10.

It is noted that it is preferable that the positive electrode binding agent with an acrylic group contains ionic conductive glass or a phosphorus element. This can prevent the positive electrode binding agent from serving as a resistor to inhibit electron trapping. Thus, heat generation in the electrode 10 can be reduced. Specifically, the presence of the phosphorus element or ionic conductive glass in the positive electrode binding agent with an acrylic group can accelerate a dissociation reaction and diffusion of lithium. With these materials contained, the acrylic resin layer can cover the active material. Accordingly, gas generation, which may be caused by a reaction of the active material and the electrolyte, can be reduced.

Furthermore, the presence of the phosphorus element or ionic conductive glass in the acrylic resin layer can result in potential relaxation to reduce the oxidation potential that reaches the active material, while lithium can move with less interference. Further, the acrylic resin layer may be excellent in withstanding voltage. Accordingly, an ionic conductive mechanism, which can attain high capacity and high output at high voltage, can be formed in the electrode 10. Still more, the diffusion rate becomes high, while the resistance becomes low. This can suppress temperature rise at high output, thereby increasing the lifetime and safety.

### [Electrode 20]

The electrode 20 is capable of occluding and extracting the ions generated in the electrode 10. As the active material of the electrode 20, natural graphite, artificial graphite, graphene, silicon based composite material (silicide), silicon oxide based materials, titanium alloy based materials, and various types of alloy composition materials can be used solely or in combination.

For example, the electrode 20 may contain graphene. In this case, the electrode 20 serves as a n-type semiconductor. Here, graphene forms ten or less nano-level layers. Grapheme may include a carbon nanotube (CNT).

In particular, the electrode 20 preferably contains a mixture of graphene and silicon oxide. In this case, ion (cation) occlusion efficiency of the electrode 20 can be increased. Further, each of graphene and silicon oxide is hard to function as a heating element. Thus, the safety of the secondary battery 100 can be increased.

As described above, it is preferable that the electrode 20 serves as a n-type semiconductor. The electrode 20 contains a material containing graphene and silicon. The material containing silicon may be SiOxa (xa<2), for example. Further, the use of graphene and/or silicon in the electrode 20 can result in that heat is hardly generated even when an internal short-circuit occurs in the secondary battery 100. Thus, breakdown of the secondary battery 100 can be reduced.

Moreover, a donor may be doped in the electrode 20. For example, a metal element as a donor may be doped in the electrode 20. The metal element may be alkali metal or transition metal, for example. Any of lithium, sodium, and potassium may be doped as the alkali metal, for example. Alternatively, copper, titanium or zinc may be doped as a transition metal.

The electrode 20 may contain graphene in which lithium is doped. For example, lithium may be doped by allowing a material of the electrode 20 to contain organic lithium and heating it. Alternatively, lithium metal may be attached to the electrode 20 for lithium doping. Preferably, the electrode 20 contains graphene and silicon, in which lithium is doped.

The electrode 20 contains halogen. Even when hydrofluoric acid is generated from lithium hexafluorophosphate as the electrolyte, halogen in the electrode 20 can reduce variation in characteristics of the electrode 20. Halogen includes fluorine, for example. For example, the electrode 20 may contain SiOxaF. Alternatively, halogen includes iodine.

The electrode 20 is made of a negative electrode material obtained by mixing a negative electrode active material and a negative electrode binding agent. As the negative electrode binding agent, the material similar to that of the positive electrode binding agent can be used. It is noted that a conductive material may be further mixed with the negative electrode material.

### [Ion transmission member 30]

The ion transmission member 30 is any of liquid, gel, and solid. Suitably, liquid (electrolyte) is used as the ion transmission member 30.

Salt is dissolved in a solvent of the electrolyte. As the salt, one type or a mixture of two or more types selected from the group consisting of LiPF₆, LiBF₄, LiClO₄, LiSbF₆, LiAsF₆, LiCF₃SO₃, LiN(SO₂CF₃)₂, LiN(SO₂C₂F₅)₂, LiC(SO₂CF₃)₃, LiN(SO₃CF₃)₂, LiC₄F₉SO₃, LiAlO₄, LiAlCl₄, LiCl, LiI, lithium bis(pentafluoro-ethane-sulfonyl)imide (LiBETI, LiN(SO₂C₂Fb)₂), and lithium bis(trifluoromethanesulfonyl)imide (LiTFS) may be used.

Further, one type or a mixture of plural types among ethylene carbonate (EC), fluorinated ethylene carbonate (FEC), dimethyl carbonate (DMC), diethyl carbonate (DEC), and methyl ethyl carbonate (MEC) may be used as the solvent.

Moreover, in order to ensure the safety in overcharge, there may be added to the electrolyte vinylene carbonate (VC), cyclohexylbenzene (CHB), propane sultone (PS), propylene sulfite (PRS), ethylene sulfite (ES), etc., and their degenerates.

### [Hole transmission member 40]

The hole transmission member 40 is solid or gel. The hole transmission member 40 is bonded to at least one of the electrode 10 and the electrode 20.

Where electrolyte is used as a material for the ion transmission member 30, the hole transmission member 40 preferably includes a porous layer. In this case, the electrolyte communicates with the electrode 10 and the electrode 20 through the porous layer.

For example, the hole transmission member 40 may contain a ceramic material. As one example, the hole transmission member 40 may include a porous film layer containing inorganic oxide filler. Preferably, the primary component of the inorganic oxide filler may be alumina (α-Al₂O₃), for example. The holes can move on the surface of the alumina. Further, the porous film layer may further contain ZrO₂-P₂O₅-Alternatively, titanium oxide or silica may be used as a material for the hole transmission member 40.

Preferably, the hole transmission member 40 hardly shrinks regardless of temperature variation. Further, the hole transmission member 40 preferably has low resistance. For example, nonwoven fabric carrying a ceramic material may be used as the hole transmission member 40. The nonwoven fabric hardly shrinks regardless of temperature variation. Further, the nonwoven fabric has high withstanding voltage and resistance to oxidation and exhibits low resistance. For this reason, the nonwoven fabric is suitably used as a material for the hole transmission member 40.

The hole transmission member 40 preferably functions as a generally-called separator. The hole transmission member 40 is not limited specifically as far as it is a composition that can be durable within a range of use of the secondary battery 100 and does not lose a semiconductor function in the secondary battery 100. As a material for the hole transmission member 40, nonwoven fabric carrying α-Al₂O₃ may be used preferably. The thickness of the hole transmission member 40 is not limited specifically. However, it is preferable to design the thickness to be 6 µm to 25 µm, which is a film thickness that can obtain designed capacity.

Moreover, ZrO₂-P₂O₅ is preferably mixed with alumina. This can make it easier to transmit the holes.

### [Current collectors 110, 120]

For example, the first current collector 110 and the second current collector 120 are made of stainless steel. This can increase the potential width at a low cost.

### [Examples]

Examples of the present invention will be described below. However, the present invention is not limited to the following examples.

### (Comparative Example 1)

A positive electrode material was manufactured by stirring BC-618 (lithium nickel manganese cobalt oxide by Sumitomo 3M Limited), PVDF #1320 (N-methylpyrrolidone (NMP) solution by KUREHA CORPORATION, solid content of 12 weight parts), and acetylene black at a weight ratio of 3:1:0.09 together with additional N-methylpyrrolidone (NMP) by a double-arm kneader. The positive electrode material was applied to aluminum foil with a thickness of 13.3 µm, was dried, was rolled so that its total thickness was 155 µm, and was then cut out into a predetermined size, thereby forming a positive electrode.

Artificial graphite, BM-400B (rubber particulate binding agent of styrene-butadiene copolymer by ZEON Corporation; solid content of 40 weight parts), and carboxymethylcellulose (CMC) were stirred at a weight ratio of 100:2.5:1 together with an appropriate amount of water by a double-arm kneader, thereby preparing a negative electrode material. The negative electrode material was applied to copper foil with a thickness of 10 µm, was dried, was rolled so that its total thickness was 180 µm, and was then cut out into a predetermined size, thereby forming a negative electrode.

A polypropylene microporous film with a thickness of 20 µm as a separator was interposed between the positive electrode and the negative electrode to form a layered structure. Then, the layered structure was cut out into a predetermined size and was inserted in a battery can. Electrolyte was obtained by dissolving 1 M of LiPF₆ into a mixed solvent obtained by mixing ethylene carbonate (EC), dimethyl carbonate (DMC), and methyl ethyl carbonate (MEC). After the electrolyte was introduced in a battery can in a dry air environment and was left for a predetermined period, precharge with electric current at a 0.1-C rate was performed for about 20 minutes. Then, the opening was sealed, thereby manufacturing a stacked lithium-ion secondary battery. It is noted that the battery was left for a predetermined period in a normal temperature environment for aging.

### (Example 1)

A material obtained by doping 0.7 weight % of antimony (Sb) in lithium nickelate (by Sumitomo Metal Mining Co., Ltd.), Li_{1.2}MnPO₄ (Lithiated Metal Phosphate II by The Dow Chemical Company), and Li₂MnO₃ (ZHFL-01 by Shenzhen Zhenhua E-Chem Co., Ltd.) were mixed so that the weight rates were 54.7 weight%, 18.2 weight %, and 18.2 weight %, respectively. Then, three-minute processing at a rotation speed of 1500 rpm was performed by AMS-LAB (mechanofusion by Hosokawa Micron Corporation), thereby preparing an active material of the electrode 10. Next, the active material, acetylene black as a conductive member, and a binding agent (SX9172 by ZEON Corporation) made of polyacrylic acid monomer with an acrylic group were stirred at a solid content weight ratio of 92:3:5 together with N-methylpyrrolidone (NMP) by a double-arm kneader, thereby preparing a positive electrode material.

The positive electrode material was applied to current collector foil of stainless steel (by NIPPON STEEL & SUMIKIN MATERIALS CO. ,LTD.) with a thickness of 13 µm, was dried, and was then rolled so that its surface density was 26.7 mg/cm². Thereafter, it was cut out into a predetermined size, thereby obtaining an electrode 10. The Hall effect of this electrode 10 was measured to confirm that the electrode 10 was a p-type semiconductor.

On the other hand, a graphene material ("xGnP Graphene Nanoplatelets H type" by XG Sciences, Inc.) and silicon oxide (SiOₓₐ, "SiOx"by Shanghai Shanshan Tech Co., Ltd.) were mixed at a weight ratio of 56.4:37.6. Then, the obtained substance was processed by NOB-130 (Nobilta by Hosokawa Micron Corporation) for three minutes at a rotation speed of 800 rpm, thereby preparing a negative electrode active material. Next, the negative electrode active material and a negative electrode binding agent made of polyacrylic acid monomer with an acrylic group (SX9172 by ZEON Corporation) were stirred at a solid content weight ratio of 95:5 together with N-methylpyrrolidone (NMP) by a double-arm kneader, thereby manufacturing a negative electrode material.

The negative electrode material was applied to current collector foil of stainless steel (NIPPON STEEL & SUMIKIN MATERIALS CO.,LTD.) with a thickness of 13 µm, was dried, and was then rolled so that its surface density was 5.2 mg/cm². Thereafter, it was cut out into a predetermine size, thereby forming an electrode 20.

A sheet of nonwoven fabric with a thickness of 20 µm carrying α-alumina ("Nano X" by Mitsubishi Paper Mills Ltd.) was interposed between the electrode 10 and the electrode 20 to form a layered structure. Then, the layered structure was cut out into a predetermined size and was inserted in a battery container. The nonwoven fabric sheet carrying α-alumina was processed so as to be impregnated with "Novolyte EEL-003" by Novolyte Technologies, Inc. (a substance obtained by adding 2 weight % of vynilene carbonate (VC) and 1 weight % of lithium bis(oxalate)borate (LiBOB)).

Subsequently, a mixed solvent obtained by mixing ethylene carbonate (EC), dimethyl carbonate (DMC), ethylmethyl carbonate (EMC), and propylene carbonate (PC) at a volume ratio of 1:1:1:1 was prepared. Then, 1 M of LiPF₆ was dissolved into the mixed solvent, thereby obtaining electrolyte. Then, the electrolyte was introduced into a battery container in a dry air environment and was left for a predetermined period. Thereafter, precharge with electric current at a 0.1-C rate was performed for about 20 minutes. Then, the opening was sealed. It was left for a predetermined period in a normal temperature environment for aging, thereby manufacturing a secondary battery.

### (Example 2)

In Example 2, the same secondary battery as in Example 1 was manufactured, wherein Li_{1.2}MnPO₄ in Example 1 was replaced by Li_{1.2}MnPO₄F.

### (Example 3)

In Example 3, the same secondary battery as in Example 1 was manufactured, wherein Li_{1.2}MnPO₄ in Example 1 is replaced by Li_{1.4}MnSiO₄.

### (Example 4)

In Example 4, the same secondary battery as in Example 1 was manufactured, wherein Li_{1.2}MnO₃ in Example 1 was changed to Li_{1.3}(Fe_{0.2}Ni_{0.2})Mn_{0.6}O₃.

### (Example 5)

In Example 5, the same secondary battery as in Example 1 was manufactured, wherein a carbon nanotube by CNano Technology Limited was added to graphene in Example 1 so that their volume ratio was 3:1.

### (Example 6)

In Example 6, lithium metal foil having an area of one seventh of the electrode 20 was attached to the electrode 20 in Example 1, thereby manufacturing a secondary battery.

### (Example 7)

In Example 7, in preparing the negative electrode material in Example 1, 0.06 weight % of lithium powder was added in an environment at a moisture content of 10 ppm or lower, thereby manufacturing a secondary battery.

### (Example 8)

In Example 8, in preparing the negative electrode material in Example 1, 0.09 weight % of FeF₃ powder was added, thereby manufacturing a secondary battery.

### (Example 9)

In Example 9, in preparing the negative electrode material in Example 1, 0.03 weight % of iodine was added, thereby manufacturing a secondary battery.

### (Example 10)

In Example 10, in preparing the negative electrode material in Example 1, 0.06 weight % of sodium powder was added, thereby manufacturing a secondary battery.

### (Example 11)

In Example 11, in preparing the negative electrode material in Example 1, 0.06 weight % of potassium powder was added, thereby manufacturing a secondary battery.

### (Example 12)

In Example 12, in preparing the negative electrode material in Example 1, 0.06 weight % of titanium powder was added, thereby manufacturing a secondary battery.

### (Example 13)

In Example 13, in preparing the negative electrode material in Example 1, 0.06 weight % of zinc powder was added, thereby manufacturing a secondary battery.

### (Example 14)

In Example 14, ZrO₂-P₂O₅ at a volume ratio of 250 ppm was added to the nonwoven fabric in Example 1, thereby manufacturing a secondary battery.

### (Example 15)

In Example 15, in preparing the negative electrode material in Example 1, 0.8 weight % of lithium octylate was added, thereby manufacturing a secondary battery.

It is noted that the batteries in Examples 1-15 and Comparative Example 1 manufactured as above were evaluated by the following methods.

### (Evaluation of initial capacity of battery)

The capacities of the secondary batteries were compared for performance evaluation on the assumption that the battery in Comparative Example 1 had a 1-C rate discharge capacity of 100 within a potential range of 2-4.3 V. As to the type of the battery in this time, a layer cell using a rectangular battery can was employed. Further, the capacities of the secondary batteries were compared also within a potential range of 2-4.6 V for performance evaluation. Moreover, each discharge capacity ratio between at 10C and at 1C was measured.

### (Nail penetration test)

The state of heat generation and the outer appearance were observed when an iron wire nail with a diameter of 2.7 mm penetrated each secondary battery, which was charged fully, at a speed of 5 mm/sec. in a normal temperature environment. The results are indicated in Table 1 below. In table 1, each secondary battery in which no variation in temperature and outer appearance was observed is indicated as "OK". While on the other hand, each battery in which any variation in temperature or outer appearance was observed is indicated as "NG".

### (Overcharge test)

The electric current at a charge rate of 200 % was maintained. Then, variation in outer appearance was observed for over 15 minutes. The results are indicated in Table 1 below. In Table 1, each secondary battery, in which no abnormality is caused, indicated as "OK". While on the other hand, each secondary battery, in which any variation (swelling, breakage, or the like) is caused, is indicated as "NG".

### (Life characteristic at normal temperature)

After the secondary batteries in Examples 1-15 and Comparative Example 1 were charged within a potential range of 2-4.3 V at a temperature of 25°C at 1C/4.3 V, each secondary battery was subjected to 3000 cycles of 1C/2V discharge. Then, a reduction in capacity relative to the initial capacity was measured for comparison.

### (Evaluation results)

The results of the above described evaluations are indicated in Table 1.

**[Table 1]**

| | Capacity ratio in 1-C discharge | Capacity (1C) [mAh/g] 2-4.3V | Capacity (1C) [mAh/g] 2-4.6V | Capacity ratio between 10C- and 1C-discharge | Life test (capacity maintaining rate) [%] | Safety test | |
|---|---|---|---|---|---|---|---|
| | | | | | | Overcharging | Nail penetration test |
| Comparative Example 1 | 100 | 170 | NG (degradation) | 0.04 | 58 | NG | NG |
| Example 1 | 565 | 961 | 987 | 0.92 | 90 | OK | OK |
| Example 2 | 516 | 877 | 934 | 0.89 | 94 | OK | OK |
| Example 3 | 561 | 954 | 983 | 0.95 | 88 | OK | OK |
| Example 4 | 538 | 915 | 933 | 0.92 | 91 | OK | OK |
| Example 5 | 572 | 972 | 991 | 0.92 | 91 | OK | OK |
| Example 6 | 647 | 1100 | 1183 | 0.93 | 92 | OK | OK |
| Example 7 | 641 | 1090 | 1117 | 0.92 | 91 | OK | OK |
| Example 8 | 618 | 1051 | 1098 | 0.88 | 86 | OK | OK |
| Example 9 | 596 | 1013 | 1072 | 0.93 | 89 | OK | OK |
| Example 10 | 607 | 1032 | 1077 | 0.91 | 90 | OK | OK |
| Example 11 | 589 | 1001 | 1061 | 0.89 | 90 | OK | OK |
| Example 12 | 577 | 981 | 1000 | 0.92 | 91 | OK | OK |
| Example 13 | 603 | 1025 | 1069 | 0.93 | 93 | OK | OK |
| Example 14 | 611 | 1039 | 1075 | 0.94 | 93 | OK | OK |
| Example 15 | 624 | 1061 | 1105 | 0.93 | 91 | OK | OK |

The secondary battery in Comparative Example 1 is a general lithium-ion secondary battery. Overheating after one second from the nail penetration was significant in the secondary battery in Comparative Example 1 regardless of the nail penetration speed. By contrast, overheating after nail penetration was suppressed to a great degree in the secondary battery in Example 1. Each battery after the nail penetration test was checked to find that the separator was melted in a wide range in the secondary battery in Comparative Example 1. By contrast, the original shape of the ceramic containing nonwoven fabric was maintained in the second battery in Example 1. It can be considered from this fact that overheating to a great degree could be prevented because the structure of the ceramic containing nonwoven fabric was not broken, and expansion of part of the short-circuit could be reduced even in heat generation by a short-circuit caused after nail penetration.

The positive electrode binding agent will be examined next. The secondary battery in Comparative Example 1, which uses PVDF as the positive electrode binding agent, could not suppress overheating when the nail penetrating speed was reduced. The secondary battery in Comparative Example 1 was disassembled and examined to find that the active material fell off from the aluminum foil (current collector). The reason of this might be as follows.

When the nail penetrated the secondary battery in Comparative Example 1 to cause an internal short-circuit, the short-circuit generated Joule heat to melt PVDF (crystalline melting point of 174°C), thereby deforming the positive electrode. When the active material fell off, the resistance was reduced to cause the electric current to further easily flow. This accelerated overheating to deform the positive electrode. By contrast, in Example 1, a product by ZEON Corporation, SX9172 was used as the negative electrode binding agent. This resulted in reduction in deformation by overheating.

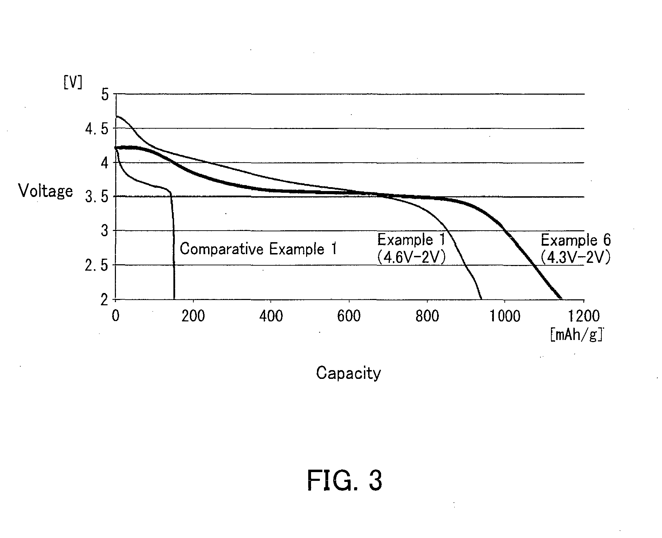

FIG. 3 shows each capacity in 1-C rate discharge in Examples 1 and 6 and Comparative Example 1. FIG. 3 proves that the secondary batteries in Examples 1 and 6 have high capacity.

The secondary battery according to the present invention can attain high output and high capacity and is therefore suitably applicable to large-size storage batteries. For example, the secondary battery according to the present invention is suitably employable as a storage battery in an electric power generating mechanism of which output is unstable, such as geothermal power generation, wind power generation, solar power generation, water power generation, and wave power generation. Further, the secondary battery according to the present invention can be suitably employed in mobile entities, such as electric vehicles.

## Claims

1. A secondary battery, comprising:
a first electrode;
a second electrode;,
an ion transmission member in contact with the first electrode and the second electrode; and
a hole transmission member in contact with the first electrode and the second electrode.

2. The secondary battery of claim 1, wherein
the first electrode contains a composite oxide, and
the composite oxide contains alkali metal or alkali earth metal.

3. The secondary battery of claim 2, wherein
the composite oxide contains a p-type composite oxide as a p-type semiconductor.

4. The secondary battery of claim 3, wherein
the p-type composite oxide contains lithium and nickel, in which at least one type selected from the group consisting of antimony, lead, phosphorus, boron, aluminum, and gallium is doped.

5. The secondary battery of claim 3 or 4, wherein
the composite oxide contains a composite oxide capable of being in a solid solution state with the p-type composite oxide.

6. The secondary battery of any one of claims 3-5, wherein
the composite oxide further contains a composite oxide having an olivine structure.

7. The secondary battery of claim 6, wherein
the composite oxide having an olivine structure contains lithium and manganese, and
the lithium has a valence larger than 1.

8. The secondary battery of claim 2, wherein
the composite oxide contains:
a p-type composite oxide as a p-type semiconductor;
a composite oxide capable of in a solid solution state with the p-type composite oxide; and
a composite oxide having an olivine structure.

9. The secondary battery of claim 8, wherein
the composite oxide contains LiₓNi_{y}M_{z}O_{α}, Li₂MnO₃, and Li_{β}MnPO₄, wherein 0<x<3, y+x=1, 1<α<4, β>1.0, and M is at least one type selected from the group consisting of antimony, lead, phosphorus, boron, aluminum, and gallium.

10. The secondary battery of claim 8, wherein
the composite oxide contains LiₓNi_{y}M_{z}O_{α}, Li₂MnO₃, and LiyMnSiO₄, wherein 0<x<3, y+z=1, 1<α<4, γ>1.0, and M is at least one type selected from the group consisting of antimony, lead, phosphorus, boron, aluminum, and gallium.

11. The secondary battery of claim 8, wherein
the composite oxide contains Li₁₊ₓ(Fe_{0.2}Ni_{0.2})Mn_{0.6}O₃, Li₂MnO₃, and Li_{β}MnPO₄,
wherein 0<x<3, β>1.0, and M is at least one type selected from the group consisting of antimony, lead, phosphorus, boron, aluminum, and gallium.

12. The secondary battery of any one of claims 2-11, wherein
the composite oxide contains fluorine.

13. The secondary battery of any one of claims 1-12, wherein
the ion transmission member is any of liquid, gel, and solid.

14. The secondary battery of any one of claims 1-13, wherein
the hole transmission member includes nonwoven fabric carrying a ceramic material.

15. The secondary battery of any one of claims 1-13, wherein
at least one of the first electrode and the second electrode is bonded to a porous film layer containing inorganic oxide filler.

16. The secondary battery of claim 15, wherein
the organic oxide filler contains α-Al₂O₃ as a main component.

17. The secondary battery of claim 16, wherein
the porous film layer further contains ZrO₂-P₂O₅.

18. The secondary battery of any one of claims 1-17, wherein
the second electrode contains graphene.

19. The secondary battery of claim 18, wherein
the graphene includes a carbon nanotube.

20. The secondary battery of claim 18 or 19, wherein
lithium is doped in the graphene.

21. The secondary battery of claim 20, wherein
the lithium is doped in a manner that the second electrode is allowed to contain organic lithium and is heated.

22. The secondary battery of claim 20, wherein
lithium metal is attached to the second electrode.

23. The secondary battery of any one of claims 18-22, wherein
the second electrode contains halogen.

24. The secondary battery of claim 23, wherein
the halogen includes fluorine.

25. The secondary battery of claim 23 or 24, wherein
the halogen includes iodine.

26. The secondary battery of any one of claims 18-25, wherein
the second electrode further contains silicon.

27. The secondary battery of any one of claims 18-26, wherein
the second electrode contains alkali metal.

28. The secondary battery of claim 27, wherein
the alkali metal contains sodium.

29. The secondary battery of claim 27 or 28, wherein
the alkali metal contains potassium.

30. The secondary battery of any one of claims 18-29, wherein
the second electrode contains titanium.

31. The secondary battery of any one of claims 18-30, wherein
the second electrode contains zinc.

32. The secondary battery of any one of claims 1-31, wherein
at least one of the first electrode and the second electrode includes an acrylic resin layer.

33. The secondary battery of claim 32, wherein
the acrylic resin layer includes rubber macromolecules containing polyacrylic acid as a basic unit.

34. The secondary battery of claim 33, wherein
the acrylic resin layer includes macromolecules which have molecular weights different from each other as the rubber macromolecules.

35. The secondary battery of any one of claims 1-34, further comprising:
a first current collector in contact with the first electrode; and
a second current collector in contact with the second electrode,
wherein each of the first current collector and the second current collector is made of stainless steel.
